Europäisches Patentamt

European Patent Office

Office européen des brevets

(19)

(11) **EP 1 148 621 A2**

(12) **EUROPÄISCHE PATENTANMELDUNG**

(43) Veröffentlichungstag:
24.10.2001  Patentblatt 2001/43

(51) Int Cl.⁷: $H02M\ 3/07$

(21) Anmeldenummer: 01108428.2

(22) Anmeldetag: 04.04.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **11.04.2000  DE 10017920**

(71) Anmelder: **Infineon Technologies AG**
**81669 München (DE)**

(72) Erfinder:
• **Bloch, Martin**
**82194 Groebenzell (DE)**
• **Deml, Christoph**
**81735 Muenchen (DE)**

(74) Vertreter: **Bickel, Michael et al**
**Westphal - Mussgnug & Partner**
**Patentanwälte**
**Mozartstrasse 8**
**80336 München (DE)**

(54) **Ladungspumpenanordnung**

(57)    Die Erfindung betrifft eine Ladungspumpenanordnung zur Anpassung einer Ladungspumpe an die gegebenen Verhältnisse. Die erfindungsgemäße Ladungspumpenanordnung weist eine Ladungspumpe mit einer Mehrzahl miteinander verbundener Pumpstufen mit jeweils mindestens einem Pumpkondensator sowie eine Regelungseinrichtung auf, wobei die Regelungseinrichtung derart ausgelegt ist, dass sie in Abhängigkeit der zu berücksichtigenden Verhältnisse mindestens eine der Pumpstufen überbrückt bzw. ausschaltet. Die von der Ladungspumpenanordnung benötigten Pumpstufen werden für den momentanen Arbeitspunkt in Abhängigkeit von Eingangs- bzw. Ausgangsspannungen und Ströme optimal gewählt, wodurch der Wirkungsgrad der Ladungspumpenanordnung optimal eingestellt werden kann.

FIG 2

**Beschreibung**

Die Erfindung betrifft eine Ladungspumpenanordnung der im Oberbegriff des Patentanspruchs 1 genannten Art, das heißt eine Ladungspumpenanordnung zur Anpassung einer Ladungspumpe an die gegebenen Verhältnisse, mit einer Ladungspumpe, die zur Erzeugung eines Ladungspumpenstroms eine Mehrzahl miteinander verbundener Pumpstufen mit jeweils mindestens einem Pumpkondensator aufweist.

Dass für bestimmte Anwendungen in integrierten Halbleiterschaltungen häufig eine von der Versorgungsspannung unterschiedliche Spannung benötigt wird, ist vielfach bekannt und bedarf keiner näheren Erläuterung. Solange die zu erzeugende Spannung betragsmäßig kleiner ist, als die an der betreffenden integrierten Halbleiterschaltung angelegte Versorgungsspannung, ist dies noch mit relativ einfachen Mitteln zu bewerkstelligen. Anders verhält es sich jedoch, wenn die in der integrierten Halbleiterschaltung zu erzeugende Spannung betragsmäßig größer ist, als die entsprechende Versorgungsspannung. Insbesondere in integrierten Halbleiterspeichern, wie zum Beispiel einem Flash-Speicher, einem EEPROM, einem DRAM oder einem FRAM, etc., sind mitunter sehr hohe positive wie negative Spannungen während des Betriebs erforderlich. Gleichzeitig bedingt jedoch die stete Entwicklung zu immer kleineren Halbleiterdesigns eine stetig verringerte Versorgungsspannung. Um nun höhere Spannungen effizient und auch bei den genannten niedrigen Versorgungsspannungen erzeugen zu können, bedarf es einer speziellen Pumptechnik.

Hierfür werden in der Regel Ladungspumpen mit mehreren Pumpstufen verwendet, die nach dem Prinzip der kapazitiven Spannungsvervielfachung arbeiten und im einfachsten Fall pro Pumpstufe eine MOS-Diode und einen Kondensator aufweisen.

Eine gattungsgemäße Ladungspumpe mit einer Vielzahl von Pumpstufen ist in der europäischen Patentanmeldung EP 0 865 149 A2 beschrieben. Fig. 1 zeigt eine aus der EP 0 865 149 A2 bekannte Ladungspumpe LP mit n Pumpstufen um schrittweisen Ladungstransfer von einer Stromversorgung auf der einen Seite, welche die Versorgungsspannung abgibt, zu einem Lastkondensator CL auf der anderen Seite der Ladungspumpe LP, an dem die erhöhte Spannung abgreifbar ist. Der Ladungstransport zu dem Lastkondensator CL erfolgt über mehrere Dioden D1 - Dn und Pumpkondensatoren C1 - Cn, die Bestandteil der einzelnen Pumpstufen P1 - Pn sind und gemeinsam den Leistungspfad bilden. Die Dioden D1 - Dn werden dabei alternierend durchgeschaltet bzw. gesperrt und die Pumpkondensatoren C1 - Cn alternierend aufgeladen bzw. entladen.

Bei einer solchen Ladungspumpe gilt im stationären, das heißt im eingeschwungenen Zustand, allgemein:

$$VL = n \cdot VDD + VIN - n \cdot IL/f \cdot C,$$

wobei mit VL und IL das Ausgangspotential bzw. der Ausgangsstrom der Ladungspumpe, mit n die Anzahl der Pumpstufen, mit VDD das Versorgungspotential, mit VIN das Eingangspotential, mit C = C1 + C2 + ..+ Cn die Gesamtkapazität und mit f die Frequenz der Ladungspumpenanordnung bezeichnet ist. $n \le n_{worst\ case}$ ist hierbei eine flexible Größe und bestimmt im Wesentlichen den Wirkungsgrad $\eta$ der Ladungspumpe, wobei $\eta$ = PL/Pin dem Verhältnis von der aus der Ladungspumpe ausgekoppelten Leistung zu der Eingangsleistung entspricht. $n_{worst\ case}$ bezeichnet dabei die Anzahl der Pumpstufen der Ladungspumpenanordnung, die minimal bereitgestellt werden muss, um die Ladungspumpenanordnung für alle denkbaren Permutationen von Eingangs- bzw. Ausgangsspannungen/-strömen zu dimensionieren.

Die Anzahl der Pumpstufen und somit der Pumpkondensatoren n müssen bei der oben genannten Ladungspumpe also für den ungünstigsten Fall dimensioniert werden, das heißt, für ein minimales Versorgungspotential und Eingangspotential sowie ein maximal benötigtes Ausgangspotential/-strom. Da dieser ungünstigste Fall in der Regel sehr selten auftritt, ist die Ladungspumpe für den Normalbetrieb typischerweise überdimensioniert, was einen ungünstigen Wirkungsgrad zur Folge hat. Das heißt, durch die Ladungspumpe wird sehr viel mehr Leistung verbraucht, als tatsächlich benötigt wird.

Da die oben genannten Ladungspumpen heute zunehmend auch in kontaktlosen elektrischen und elektronischen Systemen, beispielsweise Handys, Chipkarten, Smartcard oder drahtlosen Einrichtungen der Medizintechnik, bei denen die Stromversorgung in der Regel über eine Batterie oder einen Akkumulator erfolgt und somit begrenzt ist, eingesetzt werden, ist hier zusätzlich erwünscht, dass der Gesamtenergieverbrauch des Systems möglichst gering gehalten wird, um eine lange Betriebsdauer zu ermöglichen. Ladungspumpenanordnungen nach dem Stand der Technik kommen diesem Anspruch jedoch nur bedingt bzw. überhaupt nicht entgegen.

Der vorliegenden Erfindung liegt daher die Aufgabe zugrunde, eine Ladungspumpenanordnung der eingangs genannten Art anzugeben, die in Bezug auf deren Wirkungsgrad möglichst optimal an die gegebenen Verhältnisse anpassbar ist.

Erfindungsgemäß wird diese Aufgabe durch eine Ladungspumpenanordnung mit den Merkmalen des Patentanspruchs 1 gelöst. Demnach ist eine gattungsgemäße Ladungspumpenanordnung vorgesehen, die dadurch gekennzeichnet ist, dass Mittel vorgesehen sind, mittels der in Abhängigkeit der zu berücksichtigenden Verhältnisse mindestens eine der Pumpstufen überbrückbar oder ausschaltbar ist.

Die von der Ladungspumpenanordnung benötigten Pumpstufen werden für den momentanen Arbeitspunkt in Abhängigkeit von Eingangs- bzw. Ausgangsspannungen/-strömen optimal gewählt, wodurch der Wirkungsgrad der Ladungspumpenanordnung optimal eingestellt werden kann. Die Ladungspumpe wird dabei um eine entsprechende Anzahl von Pumpstufen verkürzt. Die genannte Verkürzung der Ladungspumpe erfolgt auf sehr einfache Weise durch Überbrückung bzw. durch Abschaltung von nicht benötigten Pumpstufen. Dabei kann der Ausgangsstrom bzw. die Ausgangsspannung der Ladungspumpe durch eine Messeinrichtung gemessen und ausgewertet. Abhängig vom Ausgangsstrom bzw. der Ausgangsspannung wird dann ein Regelsignal erzeugt, das als Regelgröße in die Ladungspumpe rückgekoppelt wird. Über dieses Regelsignal lässt sich eine oder mehrere, typischerweise nicht benötigte Pumpstufen, abschalten bzw. überbrücken.

Alternativ wäre auch denkbar, durch eine geeignete Wahl der Anzahl der Pumpstufen einen gewünschten Ausgangsstrom bzw. eine gewünschte Ausgangsspannung der Ladungspumpe zu realisieren. Auf diese Weise lässt sich je nach Anwendung eine Ladungspumpenanordnung mit unterschiedlichen Ausgangsströmen bzw. Ausgangsspannungen definiert erzeugen.

In der einfachsten Ausführungsform kann die Abschaltung bzw. Überbrückung nicht benötigter Pumpstufen durch einen AD-Wandler erfolgen, der aus dem analogen Ausgangssignal der Ladungspumpe ein digitalisiertes Ausgangssignal erzeugt, welches einem nachgeschalteten Aufwärts-/Abwärtszähler oder einem Schieberegister zugeführt wird. Das Schieberegister bzw. der Aufwärts-/Abwärtszähler erzeugen aus dem digitalisierten Ausgangssignal ein digitales Regelsignal. Im einfachsten Fall kann dieses digitale Regelsignal als Enablesignal zur Ansteuerung der einzelnen Pumpstufen herangezogen werden, um diese auszuschalten.

Die Verkürzung der Ladungspumpenanordnung ist vom Pumpenanfang, das heißt vom Eingang der Ladungspumpe her, am einfachsten realisierbar, ist jedoch prinzipiell an jeder Stelle der Ladungspumpe möglich.

Das Prinzip der Verkürzung der Ladungspumpe ist besonders vorteilhaft bei allen Formen von positiven wie negativen Pumpen. Ladungspumpen mit Rückspeisung werden durch die erfindungsgemäße Verkürzung erst sinnvoll.

Besonders vorteilhaft ist es, wie bei der nachfolgenden Ladungspumpenanordnung noch ausführlich beschrieben wird, wenn jede der Pumpstufen einzeln und unabhängig von den jeweils anderen Pumpstufen abschaltbar bzw. überbrückbar ist. In der Praxis reicht es jedoch vollständig aus, wenn einige wenige Pumpstufen - typischerweise eine oder zwei - mittels geeigneter schaltungstechnischer Maßnahmen, wie dies durch die vorliegende Erfindung möglich ist, abgeschaltet werden.

Besonders vorteilhaft ist es, wenn die Pumpkondensatoren einer oder mehrerer überbrückter bzw. ausgeschalteter Pumpstufen gleichzeitig zur Pufferung der Ausgangspannung herangezogen werden.

Typischerweise weisen alle Pumpkondensatoren jeweils dieselbe Kapazität auf.

Die steuerbaren Schalter können vorteilhafterweise als einfache Transistorelemente, beispielsweise als MOS-Transistoren, oder auch als Diodenelemente, insbesondere als MOS-Dioden, ausgebildet sein. Selbstverständlich lassen sich die steuerbaren Schalter auch beliebig anders realisieren.

Vorteilhafterweise ist der Steueranschluss der steuerbaren Schalter mit einem Boost-Kondensator und einem Boost-Transistor derart verschaltet, dass zum Zeitpunkt eines Ladungsflusses durch diesen steuerbaren Schalter dessen Leitfähigkeit erhöht wird. Insbesondere bei steuerbaren Schaltern, die für Hochspannungs- oder Hochstromanwendungen ausgelegt sind, ist diese Maßnahme zwingend erforderlich, um eine Ladungspumpe mit ausreichend hoher Taktfrequenz bereitstellen zu können.

Weitere vorteilhafte Ausgestaltungen und Weiterbildungen der Erfindung sind den Unteransprüchen, der folgenden Beschreibung und den Figuren entnehmbar.

Die Erfindung wird nachfolgend anhand eines in den Figuren der Zeichnung angegebenen Ausführungsbeispiele näher erläutert. Es zeigt dabei:

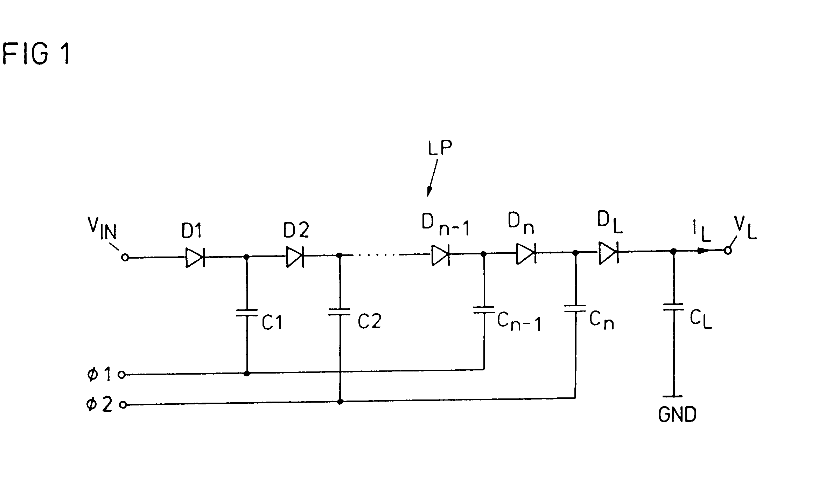

Fig. 1  eine gattungsgemäße Ladungspumpe gemäß dem Stand der Technik;

Fig. 2  eine erfindungsgemäße Ladungspumpenanordnung mit einer Regelungseinrichtung im Rückkopplungszweig;

Fig. 3  einen Ausschnitt der Ladungspumpenanordnung entsprechend Fig. 2;

Fig. 4  einen Ausschnitt der Ladungspumpenanordnung entsprechend Fig. 2.

In allen Figuren der Zeichnung sind gleiche bzw. funktionsgleiche Elemente mit gleichen Bezugszeichen versehen worden.

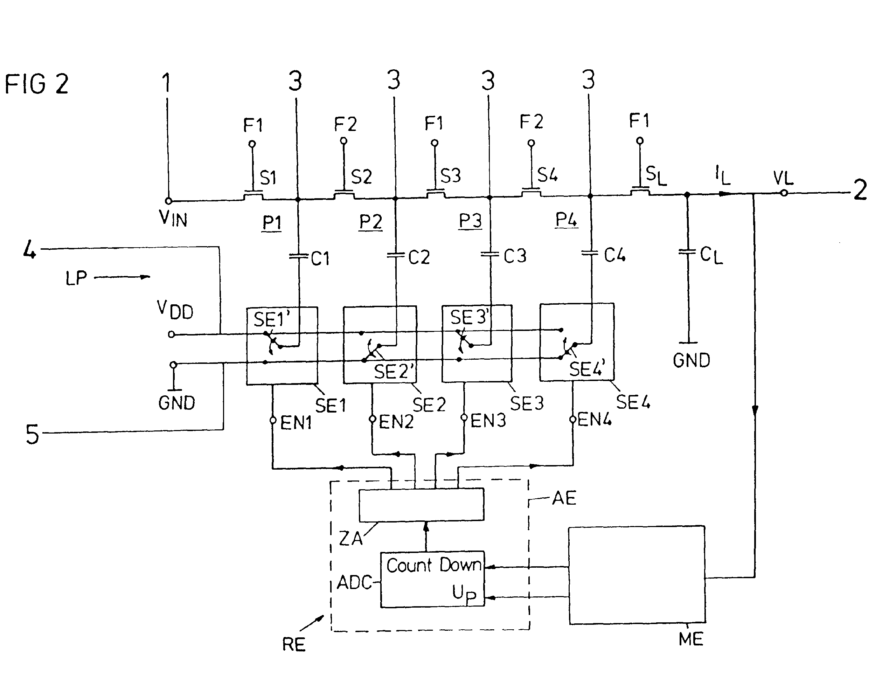

Fig. 2 zeigt eine erfindungsgemäße Ladungspumpenanordnung, die eine vierstufige Ladungspumpe LP, das heißt eine Ladungspumpe mit vier Pumpstufen P1..P4, aufweist. Jede der Pumpstufen P1..P4 weist einen steuerbaren Schalter S1..S4 und einen Pumpkondensator C1..C4 auf. Die steuerbaren Schalter S1..S4 sind über deren Laststrecken in Reihe geschaltet, wobei diese Reihenschaltung zwischen einem Eingang 1, in den ein Eingangspotential VIN in die Ladungspumpenanordnung einkoppelbar ist, und einem Ausgang 2, an dem ein Ausgangspotential VL abgreifbar ist, angeordnet. Die Pumpkondensatoren C1..C4 sind derart angeordnet, dass jeweils ein Kondensatoranschluss an einem Knoten 3 zwischen jeweils zwei steuerbaren Schaltern S1..S4 angeschlossen ist und der jeweils anderen Kondensatoranschluss mit einer steuerbaren Schalteinheit SE1..SE4 verbunden ist. Der Aufbau und die Funktionsweise dieser steuerbaren Schalteinheiten SE1.. SE4 wird nachfolgend noch detailliert beschrieben.

Zwischen der Reihenschaltung der steuerbaren Schalter und dem Ausgang 2 der Ladungspumpe LP ist ein weiterer steuerbarer Schalter SL angeordnet. Ferner ist ein Pufferkondensator Kondensator CL zwischen dem Ausgangsanschluss 2 und einem Anschluss mit einem Bezugspotential GND angeordnet. Die Steueranschlüsse sämtlicher steuerbarer Schalter S1..S4, SL sind mit jeweils einem Taktsignal F1, F2, welches aus einem Oszillatortakt generierbar ist, derart ansteuerbar, dass die steuerbaren Schalter S1..S4, SL abwechselnd auf- und abschaltbar sind.

Ferner enthält die Ladungspumpenanordnung entsprechend Fig. 2 eine Regeleinrichtung RE, die eine Messeinrichtung ME und eine Auswerteeinrichtung AE umfasst. Über die Messeinrichtung ME, die mit dem Ausgang 2 der Ladungspumpe LP verbunden ist, ist ein Ausgangssignal, das heißt ein Ausgangsstrom IL oder ein Ausgangspotential VL, vom Ausgang der Ladungspumpe LP abgreifbar und messbar. Im vorliegenden Fall enthält die Messeinrichtung ME einen Analog-Digitalumsetzer, der aus dem analogen Ausgangssignal IL, VL ein digitalisiertes Ausgangssignal erzeugt, welches der nachgeschalteten Auswerteeinrichtung AE zugeführt wird. Die Auswerteeinrichtung AE enthält im vorliegenden Ausführungsbeispiel einen einfachen Aufwärts-/ Abwärtszähler (Up/Down Counter) ADC und einen nachgeschalteten 4-Bit Zählerstandsanzeiger ZA. Der Zählerstand des Aufwärts-/Abwärtszählers ADC wird diesem Zählerstandsanzeiger ZA zugeführt, der an seinem Ausgang pro Bit jeweils ein Enablesignal EN1.. EN4 bereitstellt, das jeweils der zugeordneten steuerbaren Schalteinrichtung SE1..SE4 zuführbar ist.

Jede steuerbare Schalteinrichtung SE1..SE4 ist eingangsseitig zum einen mit einer ersten Versorgungsleitung 4, die mit einem Versorgungspotential VDD beaufschlagt ist, und einer zweiten Versorgungsleitung 5, die mit dem Bezugspotential GND beaufschlagt ist, verbunden. Ausgangsseitig ist jede steuerbare Schalteinrichtung SE1..SE4, wie bereits erwähnt, mit dem anderen Kondensatoranschluss des jeweils ihr zugeordneten Pumpkondensators C1..C4 verbunden. Über einen steuerbaren Schalter SE1'..SE4' innerhalb jeder der steuerbaren Schalteinrichtung SE1..SE4 ist der genannte Kondensatoranschluss abhängig von dem Enablesignal EN1..EN4 wechselseitig entweder mit dem Versorgungspotential VDD oder mit dem Bezugspotential GND beaufschlagbar. Die steuerbaren Schalter SE1'..SE4' werden ebenfalls von einem von dem Oszilatortakt ableitbaren Takt (in Figur 2 nicht dargestellt) angesteuert. Als besonders vorteilhaft erweist es sich, wenn die jeweiligen Schalter SE1..SE4, SE1'.. SE4' jeweils einer Pumpstufe P1..P4 taktsynchron arbeiten bzw. durch dasselbe Taktsignal T1, T2 angesteuert werden.

Über die Enablesignale EN1..EN4, die die steuerbaren Schalter SE1'..SE4' der Schalteinrichtungen SE1..SE4 ansteuern, sind einzelne oder alle P1.. P4 Pumpstufen abschaltbar und damit überbrückbar. Die Ladungspumpenanordnung weist dann eine um die Anzahl der überbrückten Pumpstufen P1..P4 verringerte Anzahl an Pumpstufen P1..P4 auf.

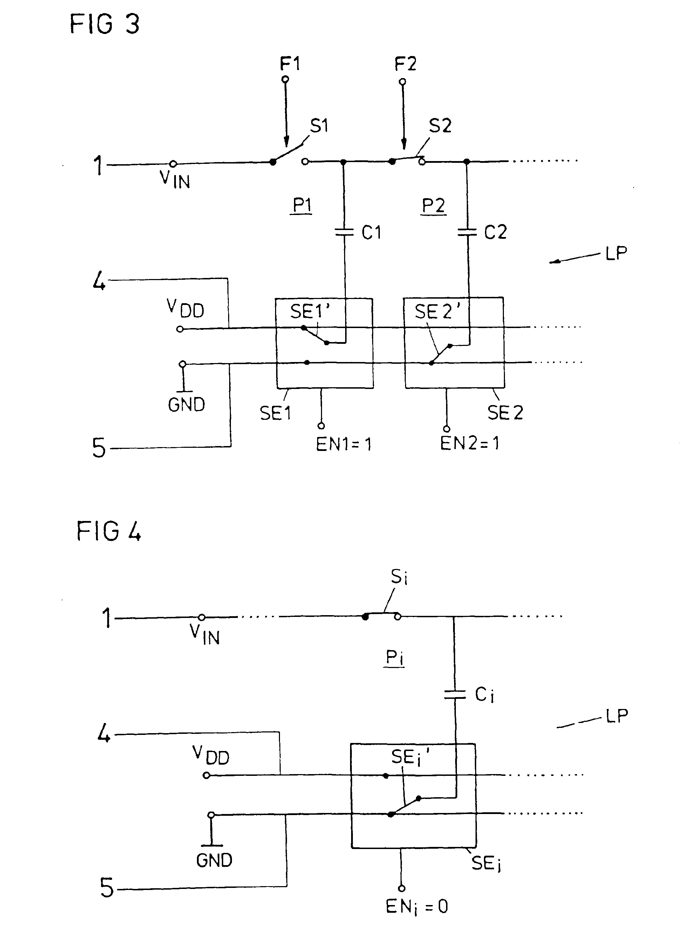

Die genaue Funktionsweise dieser Abschaltung bzw. Überbrükkung wird nachfolgend anhand der Fig. 3 und 4 verdeutlicht. Fig. 3 zeigt einen Ausschnitt der in Fig. 2 gezeigten Ladungspumpenanordnung, bei der lediglich die ersten beiden Pumpstufen P1, P2 dargestellt wurden. Der besseren Übersichtlichkeit halber wurden die entsprechenden steuerbaren Schalter S1, S2 vereinfacht - nämlich entsprechend ihrer Funktion - dargestellt. Die beiden Schalteinrichtungen SE1, SE2 werden in Fig. 3 über die Enablesignale EN1=1 und EN2=1 angesteuert, das heißt, die entsprechenden Pumpstufen P1, P2 sind augenblicklich im eingeschalteten Zustand befindlich. Im Normalbetrieb ist der Schalter S1 der ersten Pumpstufe P1 geöffnet und der Schalter SE1' mit dem Versorgungspotential VDD verbunden, wodurch sich der entsprechende Kondensator C1 aufladen kann. Bei der zweiten Pumpstufe P2 ist der Schalter S2 geschlossen und der Schalter SE2' mit dem Bezugspotential GND verbunden, wodurch sich der entsprechende Kondensator C2 entlädt.

Fig. 4 zeigt eine beliebige Pumpstufe Pi, die über ein Enablesignal ENi=0 angesteuert wird. Für diesen Fall ist der Schalter Si geschlossen und der Schalter Sei' mit dem Bezugspotential GND verbunden. Die Pumpstufe Pi ist somit über das Enablesignal Eni = 0 ausgeschaltet bzw. überbrückt worden.

Auf diese Weise lässt sich eine beliebige Anzahl nicht benötigter Pumpstufen P1..P4 wegschalten, wodurch sich der Wirkungsgrad η der Ladungspumpenanordnung signifikant optimieren lässt. Die Abschaltung der Pumpstufen P1..P4 kann dabei prinzipiell von jeder Position der Ladungspumpenanordnung her erfolgen, ist jedoch vom Pumpenanfang her bzw. auch vom Ende der Ladungspumpe LP her am sinnvollsten. Darüber hinaus sei auch noch einmal anzumerken, dass durch die Flexibilität, die die erfindungsgemäße Ladungspumpenanordnung bietet, es möglich ist, zudem auch den gewünschten Ausgangsstrom bzw. Ausgangsspannung über einen weiten Bereich durch geeignete Wahl der verwendeten Pumpstufen P1..P4 definiert einzustellen.

Im vorliegenden Ausführungsbeispiel ist die Auswerteeinheit AE auf einfache und somit vorteilhafte Weise durch einen Aufwärts-/Abwärtszähler ADC realisiert worden. Die Auswerteeinrichtung AE ließe sich jedoch auch durch ein bekanntes Schieberegister oder dergleichen realisieren. Da integrierte Halbleiterschaltungen häufig eine programmgesteuerte Einheit, wie beispielsweise einen Mikrokontroller, einen Mikroprozessor, einen Signalprozessor oder dergleichen aufweist, könnte die Funktion der Messeinrichtung ME und/oder der Auswerteeinrichtung AE vorteilhafterweise auch durch eben diese programmgesteuerte Einheit übernommen werden. Diese programmgesteuerte Einheit greift dann das Ausgangssignal IL, VL ab und erzeugt anwendungsspezifisch, das heißt in Abhängigkeit von der Programmierung, die jeweiligen Enablesignale EN1..EN4 zur Ansteuerung der steuerbaren Schalteinrichtungen SE1..SE4.

Im vorliegenden Ausführungsbeispiel sind die steuerbaren Schalter S1..S4, SL als MOS-Transistoren, insbesondere als Hochvolt-MOS-FETs, ausgebildet. Es sei jedoch an dieser Stelle darauf hingewiesen, dass die Ladungspumpe LP nicht notwendigerweise wie die vorstehend beschriebene Ladungspumpe LP mit MOS-Transistoren aufgebaut und betrieben werden muss; der Aufbau und die Betriebsweise der Ladungspumpe LP wird in der Praxis unter anderem von deren Funktion und Wirkungsweise abhängig gemacht werden. Beispielsweise ließen sich die steuerbaren Schalter S1..S4, SL auch als MOS-Dioden bzw. als einfache Dioden realisieren. Zusätzlich oder ergänzend können an den Steueranschlüssen der steuerbaren Schalter S1..S4, SL zusätzliche Schaltungsmaßnahmen getroffen werden, um die Leitfähigkeit der jeweiligen Schalter im Augenblick eines Ladungsflusses zu erhöhen. Solche Schaltungsmaßnahmen sind vielfach bekannt und können beispielsweise durch einen den steuerbaren Schalter S1..S4, SL ansteuernden Boost-Kondensator und Boost-Transistor realisiert werden.

Im vorliegenden Ausführungsbeispiel wurde die Längenveränderung der Ladungspumpe mittels einer Regelungseinrichtung vorgenommen. Die Längenveränderung kann jedoch auch vorteilhaft durch eine Steuereinrichtung, beispielsweise ein Prozessor vorgenommen werden. In diesem Fall wäre das Regelsignal als Steuersignal ausgebildet. Die Ladungspumpe könnte dann beispielsweise zur Gewinnung eines vorgegebenen Pumpprofils in geeigneter Weise angesteuert werden.

Zusammenfassend kann festgestellt werden, das durch die wie beschrieben aufgebaute und betriebene erfindungsgemäße Ladungspumpenanordnung weitgehend unabhängig von der Größe des Versorgungspotentials VDD am Eingang innerhalb eines sehr weiten Bereichs auf einfache Weise, aber nichts desto trotz äußerst effektiv beliebig hohe, insbesondere auch negative Ausgangsspannungen und/oder Ausgangsströme generiert werden können.

Die vorliegende Erfindung wurde anhand der vorstehenden Beschreibung so dargelegt, um das Prinzip der Erfindung und dessen praktische Anwendung am besten zu erklären. Selbstverständlich lässt sich die vorliegende Erfindung im Rahmen des fachmännischen Handelns in geeigneter Weise in mannigfaltigen Ausführungsformen und Abwandlungen realisieren.

Bezugszeichenliste

| 1 | Eingang |
|---|---|
| 2 | Ausgang |
| 3 | Knoten |
| 4, 5 | Versorgungsleitungen |

| ADC | Aufwärts-/Abwärtszähler |
|---|---|
| AE | Auswerteeinrichtung |
| C1..C4 | Pumpkondensatoren |
| CL | Pufferkondensator |
| D1..D4 | Dioden |
| EN1..EN4 | Enablesignal |
| GND | Bezugspotential |
| IL | Ladungspumpenstrom |
| LP | Ladungspumpe |
| ME | Messeinrichtung |
| P1..P4 | Pumpstufen |
| RE | Regelungseinrichtung |
| S1..S4 | steuerbare Schalter |
| SE1..SE4 | steuerbare Schalteinrichtung |
| SE1'..SE4' | steuerbarer Schalter |
| SL | steuerbarer Schalter |
| T1, T2 | Taktsignal, Oszillatortakt |
| VDD | Versorgungspotential |
| VIN | Eingangspotential |
| VL | Ausgangspotential |
| ZA | Zählerstandsanzeiger |

**Patentansprüche**

1. Ladungspumpenanordnung zur Anpassung einer Ladungspumpe (LP) an die gegebenen Verhältnisse, mit einer Ladungspumpe (P), die zur Erzeugung eines Ladungspumpenstromes (IL) eine Mehrzahl miteinander verbundener Pumpstufen (P1..P4) mit jeweils mindestens einem Pumpkondensator (C1..C4) aufweist,
**dadurch gekennzeichnet, dass** Mittel (RS) vorgesehen sind, mittels der in Abhängigkeit der zu berücksichtigenden Verhältnisse mindestens eine Pumpstufe (P1..P4) überbrückbar oder ausschaltbar ist.

2. Ladungspumpenanordnung nach Anspruch 1,
**dadurch gekennzeichnet, dass** die Mittel (RS) als Regelungseinrichtung (RS) ausgebildet sind.

3. Ladungspumpenanordnung nach einem der vorhergehenden Ansprüche,
**dadurch gekennzeichnet, dass** die Mittel (RE) eine Messeinrichtung (ME) zur Erfassung des Ladungspumpenstromes (IL) und/oder des Ausgangspotentials (VL) der Ladungspumpe (LP) sowie eine der Messeinrichtung (ME) nachgeschaltete Auswerteeinrichtung (AE) aufweist, die ein Regelsignal (EN1...EN4) als Funktion des Ladungspumpenstromes (IL) und/oder des Ausgangspotentials (VL) bereitstellt, welches als Regelgröße in die Ladungspumpe (LP) rückgekoppelt wird.

4. Ladungspumpenanordnung nach einem der vorstehenden Ansprüche,
**dadurch gekennzeichnet, dass** die Mittel (RE) einen AD-Umsetzer aufweist, der aus dem Ladungspumpenstrom (IL) und /oder dem Ausgangspotential (VL) ein digitalisiertes Ausgangssignal bereitstellt, welches einem nachgeschalteten Schieberegister oder einem nachgeschalteten Aufwärts-/Abwärtszähler (ADC) zuführbar ist, wobei das Schieberegister bzw. der Aufwärts-/Abwärtszähler (ADC) ausgangsseitig als Regelsignal (EN1...EN4) mindestens ein Enablesignal (EN1..EN4) bereitstellt.

5. Ladungspumpenanordnung nach Anspruch 4,
**dadurch gekennzeichnet, dass** jede der Pumpstufen (P1...P4) jeweils eine über das Enablesignal (EN1..EN4) steuerbare Schalteinrichtungen (SE1.. SE4) aufweist, wobei die jeweiligen Pumpstufen (P1..P4) über die jeweils ihr zugeordneten steuerbaren Schalteinrichtungen (SE1..SE4) einzeln überbrückbar oder ausschaltbar sind.

6. Ladungspumpenanordnung nach Anspruch 4 oder 5,
**dadurch gekennzeichnet, dass** das Schieberegister oder der Aufwärts-/Abwärtszähler derart angeordnet ist, dass nicht benötigte Pumpstufen (P1.. P4) zuerst vom Eingang der Ladungspumpe (LP) her überbrückt oder ausgeschaltet werden.

7. Ladungspumpenanordnung nach einem der vorstehenden Ansprüche,
**dadurch gekennzeichnet, dass** mindestens eine der überbrückten oder ausgeschalteten Pumpstufen (P1..P4) zur Pufferung eines Versorgungspotentials (VDD) vorgesehen ist/sind.

8. Ladungspumpenanordnung nach einem der vorstehenden Ansprüche,
**dadurch gekennzeichnet, dass** die Ladungspumpe (LP) folgende Merkmale aufweist:

- einen Eingang (1), in den ein Eingangssignal (VIN) einkoppelbar ist,
- einen Ausgang (2) zur Bereitstellung eines Ausgangssignals (IL, VL),
- eine Mehrzahl zwischen dem Eingang (1) und dem Ausgang (2) angeordneter und miteinander verbundener Pumpstufen (P1..P4), die jeweils mindestens einen steuerbaren Schalter (S1..S4) und mindestens einen Pumpkondensator (C1..C4) aufweisen, wobei an jeweils einen Kondensatoranschluss jeweils ein Versorgungspotential (VDD) zum Vorladen der jeweiligen Pumpkondensatoren (C1..C4) anlegbar ist,
- einen Steuerkreis zum Ansteuern der steuerbaren Schalter (S1..S4),
- eine Taktgeberschaltung zur Bereitstellung eines Taktsignales (T1, T2) zur Ansteuerung der Pumpkondensatoren (C1..C4) und/oder des Steuerkreises und
- einen Pufferkondensator (CL) am Ausgang (2) der Ladungspumpenanordnung.

9. Ladungspumpenanordnung nach Anspruch 8,
**dadurch gekennzeichnet, dass** die steuerbaren Schalter (S1..S4) als Transistorelemente, insbesondere als MOS-FETs, ausgebildet sind.

10. Ladungspumpenanordnung nach Anspruch 8,
**dadurch gekennzeichnet, dass** die steuerbaren Schalter (S1..S4) als Diodenelemente, insbesondere als MOS-Dioden ausgebildet sind.

11. Ladungspumpenanordnung nach einem der vorstehenden Ansprüche,
**dadurch gekennzeichnet, dass** die Pumpkondensatoren (C1..C4) jeweils dieselbe Kapazität aufweisen.

12. Ladungspumpenanordnung nach einem der vorstehenden Ansprüche 3 bis 11,
**dadurch gekennzeichnet, dass** die Auswerteeinrichtung (AE) und/oder die Messeinrichtung (ME) als programmgesteuerte Einheit ausgebildet ist.

13. Ladungspumpenanordnung nach einem der vorstehenden Ansprüche,
**dadurch gekennzeichnet, dass** die Mittel (RE) mindestens eine steuerbare Schalteinrichtung (SE1..SE4) aufweist, die über ein Enablesignal (EN1..EN4) ansteuerbar ist und die Mittel (SE1'.. SE4') aufweist, über die der jeweils zugeordnete Pumpkondensator (C1..C4) im ausgeschalteten Zustand mit einem Bezugspotential (GND) beaufschlagbar ist und im eingeschalteten Zustand alternierend mit einem Versorgungspotential (VDD) oder einem Bezugspotential (GND) beaufschlagbar ist.

14. Ladungspumpenanordnung nach einem der Ansprüche 8 bis 13,
**dadurch gekennzeichnet, dass** an den jeweiligen Steueranschlüssen der steuerbaren Schalter (S1.. S4) jeweils mindestens ein Boost-Kondensator (CB) und jeweils mindestens einem Boost-Transistor derart vorgeschaltet sind, dass die jeweiligen Leitfähigkeiten der jeweiligen steuerbaren Schalter (S1..S4) im Augenblick eines Ladungsflusses erhöht ist.

15. Ladungspumpenanordnung nach einem der vorstehenden Ansprüche,
**dadurch gekennzeichnet, dass** mindestens ein Pumpkondensator (C1...C4) zur Stromrückspeisung ausgelegt ist.

FIG 1

FIG 2

EP 1 148 621 A2

FIG 3

FIG 4